# EUROPÄISCHE PATENTANMELDUNG

(11) **EP 1 338 944 A2**
(43) Veröffentlichungstag der Anmeldung: **27.08.2003**
(21) Anmeldenummer: 03008957.7
(22) Anmeldetag: 30.03.2000
(51) Int. Cl.: G06F 1/00

(54) **Verfahren zur Freischaltung einer Datei mittels einer als ein Vektor beschriebene Kennung**

(62) Teilanmeldung aus: 00106810.5
(71) Anmelder: SIEMENS AKTIENGESELLSCHAFT, 80333 München (DE)
(72) Erfinder: Drijfhout, Theo, 35619 Braunfels (DE); Thoone, Martin, 5672 PJ Nuenen (NL)

(57) **Zusammenfassung**

Es wird ein geschütztes Speichermedium für ein Navigations- bzw. Multimediasystem angegeben, bei dem überprüft wird, ob ein Nutzer von Dateien, wie z. B. Straßenkartendaten, zur Nutzung dieser Dateien berechtigt ist. Dazu weist das Navigationssystem Mittel zur Prüfung einer berechtigten Nutzung von Dateien des Massenspeichermediums, auf dem die Dateien abgespeichert sind, auf. Die Dateien sind insbesondere verschlüsselt abgespeichert. Zur Freischaltung der Nutzungsrechte an einer Datei ist vorgesehen, dass der Nutzer zunächst einen ersten und eine zweiten chiffrierten Code (PIN bzw. ACW) in das Navigationssystem eingibt. Diese Codes werden in Vektoren umgesetzt. Mit der Gerätekennung ID des Navigationssystems und dem ersten chiffrierten Code PIN wird zunächst ein Schlüssel k berechnet. Mit dem Schlüssel k und dem zweiten chiffrierten Code ACW wird eine Zugriffsberechtigungskennung AC berechnet, die mit den Zugriffsberechtigungskennungen der auf dem Speichermedium abgespeicherten Dateien verglichen wird. Bei Übereinstimmung dieser Kennungen wird die zugehörige Datei entschlüsselt und zur Nutzung durch das Navigationssystem freigegeben.

## Beschreibung

Geschütztes Speichermedium für ein Kraftfahrzeug-Navigationssystem

Die Erfindung betrifft ein Speichermedium für ein Kraftfahrzeug-Computersystem.

Kraftfahrzeug-Navigationssysteme als solche sind seit längerem bekannt und werden in zunehmendem Maße bei Neufahrzeugen oder zur Nachrüstung angeboten. Die für die Routenberechnung benötigten Landkarten sind dabei auf einem Speichermedium zusammen mit anderen Dateien, wie beispielsweise Reise- oder Hotelführern, abgespeichert. Als Speichermedium hierfür ist in der Regel eine CD-ROM vorgesehen, auf der die entsprechenden Dateien abgespeichert sind. Das Navigationssystem enthält ein zugehöriges Lesegerät zum Auslesen der Dateien. Ein Speichermedium wie eine CD-ROM oder insbesondere auch eine DVD weist eine hohe Speicherkapazität auf, so dass eine große Datenmenge, gegebenenfalls in komprimierter Form, abgespeichert werden kann. Ein solches Speichermedium kann daher einen hohen Verkaufswert aufweisen. Mit Hilfe geeigneter Geräte, wie beispielsweise eines sogenannten "CD-Brenners", ist es relativ einfach, Kopien von einer CD-ROM herzustellen. Kopierte CD-ROMs werden teilweise kostenlos unter Interessenten ausgetauscht oder gelangen illegal in den Handel. Es besteht deshalb ein Bedarf entsprechende Programme oder allgemeiner Dateien nur für registrierte Anwender freizugeben.

Da auf einer einzigen CD-ROM oder DVD mehrere Programme oder Dateien, beispielsweise die Straßenkartendaten von Europa, vorhanden sein können, ist es weiterhin von Interesse nur einzelne oder eine bestimmte Anzahl von Dateien, wie beispielsweise die Straßenkartendaten eines Landes, für einen bestimmten Anwender freizugeben. Idealerweise sollte diese Freigabe wiederum mit einem entsprechenden Kopierschutz verbunden sein, so dass nach Freigabe der Datei diese auch nur von dem registrierten und berechtigten Anwender genutzt werden kann.

Eine Aufgabe der Erfindung besteht darin, ein geschütztes Speichermedium für Navigations- oder Multimediasysteme anzugeben.

Die Aufgabe wird durch ein Speichermedium nach Anspruch 1 gelöst.

Das Navigations- oder Multimediasystem weist Mittel zur Prüfung einer berechtigten Nutzung von Dateien des Massenspeichermediums in dem Navigations- oder Multimediasystem auf. Hierdurch kann jeweils geprüft werden, ob es sich bei dem Nutzer der Daten um einen berechtigten Nutzer handelt. Handelt es sich nicht um einen berechtigten Nutzer, so hat dieser keinen Zugriff auf die Dateien des Speichermediums. Hierdurch können eine CD-ROM oder eine DVD, die die Dateien enthält, zwar in beliebiger Weise kopiert und verteilt werden, jedoch können die Daten nur in einem berechtigten System ausgelesen werden.

Multimediasysteme für Kraftfahrzeuge unterscheiden sich von reinen Navigationssystemen dadurch, dass sie mehrere Funktionen wahrnehmen. Hierzu können u.U. eine Navigationsfunktion, ein Audiofunktion mit den Komponenten Rundfunkempfänger, CDoder Kassettenabspielgerät, TV-Funktionen, eine Internetfunktion oder eine Telematikfunktion gehören. Bei dem Multimediasystem werden einzelne Komponenten wie die Ausgabeeinheit für verschiedene Funktionen benutzt. Hierzu können beispielsweise die optische Ausgabe von Zielführungshinweisen, die Wiedergabe von TV-Bildern und von Internetseiten auf einer optischen Ausgabeeinheit gehören. In den nachfolgenden Ausführungen wird aus Gründen der Übersichtlichkeit im wesentlichen auf ein Navigationssystem abgestellt, wobei jedoch stets auch ein Multimediasystem gleiche oder ähnliche Funktionen erfüllen kann.

In einer Weiterbildung ist insbesondere vorgesehen, dass das Massenspeichermedium verschlüsselte Dateien enthält. Eine Nutzung der Daten ist nur in einem berechtigten Navigationssystem möglich, das die entsprechenden Mittel zum Entschlüsseln der verschlüsselten Dateien enthält. Durch diese Maßnahme wird der Schutz der Dateien insgesamt gewährleistet.

Um einzelne Dateien für einen bestimmten Nutzer freizugeben, kann nun jede der Dateien mit einem unterschiedlichen Schlüssel verschlüsselt sein. Nur bei Kenntnis des jeweiligen Schlüssels hat der berechtigte Nutzer dann Zugriff zu einer bestimmten Datei, während er auf andere Dateien, deren Schlüssel er nicht kennt, keinen Zugriff hat. Diese Vorgehensweise erfordert jedoch die Vergabe einer Vielzahl von Schlüsseln für die verschiedenen Dateien.

In einer bevorzugten Ausführungsform ist daher vorgesehen, dass zur Freischaltung einzelner Dateien ein Dateiverwaltungssystem vorhanden ist, das zum Vergleich einer über die Eingabeeinheit eingegebene Zugriffsberechtigungskennung mit Zugriffsberechtigungskennungen der auf dem Massenspeichermedium abgespeicherten Dateien ausgelegt ist. Bei dieser Vorgehensweise ist nur ein Schlüssel zur Verschlüsselung aller Dateien erforderlich. Jede der Dateien weist jedoch eine eigene Zugriffsberechtigungskennung auf, die von dem berechtigten Nutzer einmal in das Kraftfahrzeug-Navigationssystem zur Freischaltung der entsprechenden Datei eingegeben werden muss. Das Dateiverwaltungssystem vergleicht die eingegebene Kennung mit der der Datei zugeordneten Kennung, die auf dem Speichermedium mit abgespeichert ist. Nur bei Übereinstimmung der beiden Kennungen wird die entsprechende Datei zur Nutzung durch das Navigationssystem freigegeben.

Ein solches Navigationssystem stellt bereits einen gewissen Schutz gegen unberechtigte Benutzung der Dateien dar. Jedoch kann die Kennung gegebenenfalls zusammen mit dem Schlüssel zur Entschlüsselung der Dateien von einem berechtigten Nutzer an einen unberechtigten Nutzer weitergegeben werden, so dass auch der unberechtigte Nutzer Zugang zu den Dateien erhält.

In einer weiteren Ausgestaltung ist daher vorgesehen, dass das Navigationssystem Mittel zum Dechiffrieren einer chiffriert eingegeben Zugriffsberechtigungskennung enthält. Durch die chiffrierte Eingabe der Kennung ist gewährleistet, dass ein unberechtigter Nutzer, dessen Navigationssystem nicht die entsprechenden Mittel zum Dechiffrieren der Zugriffsberechtigungskennung enthält, die Dateien nicht nutzen kann.

Als besonders vorteilhaft hat es sich herausgestellt, wenn die Zugriffsberechtigungskennung als Vektor beschreibbar ist. Durch diese spezielle Art der Kennung lässt sich diese auf einfache Weise mit der Struktur des Dateiverzeichnisses auf dem Speichermedium verknüpfen und mit mathematischen Operationen bearbeiten. Hierzu ist insbesondere vorgesehen, dass es sich um einen mindestens m-dimensionalen Vektor handelt, wobei m die Anzahl der auf dem Massenspeichermedium abgespeicherten Dateien ist. Unter Dateien werden hierbei neben Programmen, Datenbanken und dergleichen insbesondere auch Dateiverzeichnisse verstanden, die selbst wieder Dateiverzeichnisse und/oder Dateien enthalten können.

Weist das Speichermedium somit eine Dateistruktur mit m Dateien, einschließlich der Dateiverzeichnisse, auf, so weist insbesondere jeder Vektor einer Datei m Komponenten auf, die beispielsweise mit a(1), a(2), a(3), .... a(m) bezeichnet werden. Jede dieser Komponenten a(x) bezeichnet dabei eine Datei oder ein Dateiverzeichnis. Führt der Weg zu einer bestimmten Datei D(x) in der hierarchischen Dateistruktur beispielsweise über die Dateiverzeichnisse a(2), a(5), a(9), so werden diese Komponenten mit dem Wert 1 gekennzeichnet, während alle anderen Komponenten des Vektors den Wert 0 annehmen. Die Zuordnung eines solchen Vektors zu einer bestimmten Datei wird durch das Dateiverwaltungsprogramm vorgenommen, das im Navigationssystem abgespeichert ist.

In einer weiteren Ausgestaltung weist das Navigationssystem eine Gerätekennung ID auf, die in einem nicht-flüchtigen Speicherelement abgespeichert ist. Wird diese Gerätekennung ID in die Prüfung der Nutzungsberechtigung mit einbezogen, so wird eine weitere Erhöhung der Sicherheit erreicht. Ein unberechtigter Nutzer muss dann nämlich auch die Gerätekennung eines berechtigten Nutzers kennen, um die Dateien des Speichermediums nutzen zu können. Eine nochmalige Erhöhung der Sicherheit gegen unberechtigte Nutzung der Dateien wird dadurch erreicht, dass die Gerätekennung veränderbar ist. Hierdurch wird verhindert, dass ein unberechtigter Nutzer, der einmal die Gerätekennung eines berechtigten Nutzers in Erfahrung gebracht hat, auch weiterhin jede Freischaltung einer weiteren Datei des berechtigten Nutzers für seine eigene Nutzung einsetzen kann.

Insbesondere ist vorgesehen, dass das Navigationssystem Mittel zur Berechnung eines Schlüssels k zum Entschlüsseln der verschlüsselten Dateien aus einem chiffriert eingegebenen ersten Code PIN und der abgespeicherten Gerätekennung ID aufweist. Ferner ist vorgesehen, dass das Navigationssystem Mittel zur Berechnung einer Zugriffsberechtigungskennung AC aus einem zweiten chiffriert eingegebenen Code ACW unter Nutzung des Schlüssels k aufweist. Ein berechtigter Nutzer für eine bestimmte Datei, wie beispielsweise den Straßenkartendaten eines bestimmten Landes, erhält nach entsprechender Bezahlung von einer Zentralstelle oder dem Händler den ersten Code PIN und den zweiten Code ACW, die beide chiffriert sind.

Alternativ dazu ist vorgesehen, dass das Navigationssystem mit einem Kommunikationsmittel verbunden ist, das eine Kommunikation mit einer Zentralstelle ermöglicht, in der die Nutzungsrechte an den Dateien verwaltet werden. Hierdurch kann der Nutzer jederzeit und auf direktem Wege eine Freischaltung benötigter Dateien erreichen. Bei dem Kommunikationsmittel kann es sich insbesondere um ein Funktelefon handeln. Das Funktelefon kann über eine Leitung mit dem Navigationssystem verbunden sein oder es kann eine drahtlose Verbindung zwischen dem Navigationssystem und dem Kommunikationsmittel über eine Kurzstreckenfunkverbindung, beispielsweise nach dem an sich bekannten Bluetooth-Verfahren, erfolgen. Über eine Funkverbindung mittels Funktelefon können zusätzlich auch Verkehrsinformationen in das Navigationssystem gelangen, die bei der Routenplanung berücksichtigt werden.

Ein Verfahren zur Freischaltung einer auf einem Speichermedium zusammen mit mindestens einer weiteren Datei abgespeicherten und mit einer Zugriffsberechtigungskennung AC versehenen Datei zur Nutzung durch ein Computersystem, insbesondere ein Kfz-Navigations- oder Kfz-Multimediasystem, durch Auswertung eines ersten und eines zweiten chiffrierten Codes (PIN bzw. ACW) ist dadurch gekennzeichnet, dass mit einer im Computersystem abgespeicherten Gerätekennzahl ID des Computersystems und dem ersten chiffrierten Code PIN ein Schlüssel k berechnet und mit dem Schlüssel k und dem zweiten chiffrierten Code ACW die Kennung AC für die freizuschaltende Datei bestimmt wird, sowie die mit der berechneten Kennung AC versehene Datei zur Nutzung durch das Computersystem freigegeben wird. Weiterhin ist die freizuschaltende Datei vorzugsweise verschlüsselt.

Das Speichermedium, beispielsweise eine CD-ROM oder eine DVD, auf der die Dateien abgespeichert sind und verteilt werden, kann somit zwar weiterhin kopiert werden, jedoch können die Dateien zunächst nur bei Kenntnis des entsprechenden Schlüssels zur Entschlüsselung der Dateien genutzt werden. Um zu verhindern, dass auch der entsprechende Schlüssel von einem berechtigten Anwender an einen unberechtigten Anwender weitergegeben wird, ist vorgesehen, dass auch der Schlüssel seinerseits nur in chiffrierter Form an den berechtigten Anwender übermittelt wird. Der chiffrierte Code, der den Schlüssel enthält, enthält weiterhin die Gerätekennung des berechtigten Navigationssystems. Hierdurch ist gewährleistet, dass bei Weitergabe des chiffrierten Codes, der den Schlüssel enthält, die Nutzung dieses Codes auf einem weiteren Navigationssystem mit einer anderen Gerätekennzahl ausgeschlossen ist.

Um nur bestimmte Dateien zur Nutzung freizugeben, ist ein zweiter Code vorgesehen, der Angaben über die freizuschaltende Datei enthält. Auch dieser zweite Code muss zunächst in dem Navigationssystem zuerst dechiffriert werden, wobei dies ebenfalls nur mit der richtigen Gerätekennzahl des Navigationssystems möglich ist. Eine Dechiffrierung des Codes in einem nichtberechtigten Navigationssystem führt aufgrund dessen abweichender Gerätekennzahl zu einem anderen Dechiffrierergebnis und damit zu einer falschen Kennung für die freizugebende Datei. Um die Sicherheit des Verfahrens weiter zu erhöhen, ist zudem vorgesehen, dass die Gerätekennzahl bei jeder Freigabe einer Datei durch die Zentralstelle geändert wird. Die Codes PIN und ACW sowie die Gerätekennung ID, der Schlüssel k und die Zugriffsberechtigungskennung AC werden vorzugsweise als Vektoren beschrieben.

In einer besonderen Ausführungsform ist weiterhin ein Wechselvektor c vorgesehen, der bei jeder neuen Freischaltung einer Datei mit dem Vektor der Gerätekennung ID verknüpft wird, so dass ein neuer Vektor für die Gerätekennung generiert wird.

Ein erfindungsgemäßes Speichermedium, das für den Einsatz in dem beschriebenen Navigationssystem geeignet ist, weist mehrere Dateien auf, die in einer hierarchischen Dateistruktur in verschlüsselter Form abgespeichert sind und denen erfindungsgemäß zur Gewährleistung eines ausschließlich autorisierten Zugangs eine Kennung zugeordnet ist, die als Vektor beschreibbar ist. Insbesondere handelt es sich um einen m-dimensionalen Vektor, wobei m die Anzahl der Dateien ist. Vorzugsweise weist der Vektor binäre Komponenten auf. Weitere vorteilhafte Ausgestaltungen sind in den Unteransprüchen angegeben.

Die Erfindung wird nachfolgend anhand eines Ausführungsbeispiels und der Zeichnung näher erläutert. Es zeigen:
- Fig. 1:: die Komponenten eines Navigationssystem,
- Fig. 2:: das Dateiverzeichnis einer CD-ROM für ein Navigationssystem,
- Fig. 3:: ein hierarchisches Dateiverzeichnis in allgemeiner Form,
- Fig. 4:: verschiedene Varianten der Zugriffsberechtigungskennung,
- Fig. 5:: ein Ablaufdiagramm des Verfahrens.

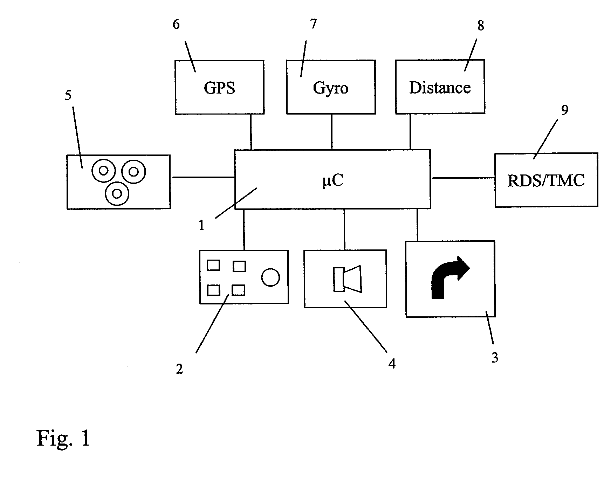

In Figur 1 sind die Komponenten eines Navigationssystems dargestellt. Zentraler Bestandteil des Navigationssystems ist die Recheneinheit 1, die mit ihrem Arbeitsspeicher und einem nicht-flüchtigen Festwertspeicher den Navigationsrechner bildet. Mit der zentralen Recheneinheit 1 ist eine manuelle Eingabeeinheit 2 verbunden, über die die Eingabe eines Zielortes sowie der chiffrierten Codes PIN und ACW erfolgen kann. Alternativ oder zusätzlich zu einer manuellen Eingabeeinheit kann eine Spracheingabeeinheit vorgesehen sein. Das Navigationssystem weist ferner eine optische Ausgabeeinheit 3 (optional) sowie eine akustische Ausgabeeinheit 4 auf, über die jeweils Zielführungsinformationen ausgegeben werden können. Weiterhin weist das Navigationssystem ein Lesegerät 5 auf, das mit der zentralen Recheneinheit 1 verbunden ist. Das Lesegerät 5 ist zum Auslesen von Dateien aus einer CD-ROM und/oder einer DVD ausgelegt.

Zur Positionsbestimmung weist das Navigationssystem weiterhin einen GPS-Empfänger 6 auf, mit dem entsprechende Satellitensignale empfangen und zur Positionsbestimmung an die zentrale Recheneinheit 1 weitergeleitet werden. Um eine von Satelliten unabhängige Positionsbestimmung vornehmen zu können, weist das Navigationssystem darüber hinaus einen Richtungssensor 7 sowie einen Wegstreckensensor 8 auf. Um eine dynamische Navigation unter Einbeziehung von Verkehrsmeldungen vornehmen zu können, ist das Navigationssystem ferner mit einem Rundfunkempfänger 9 verbunden, der zum Empfang von RDS/TMC-Meldungen ausgelegt ist. Weiterhin kann das Navigationssystem mit einem nicht dargestellten Funktelefon verbunden sein.

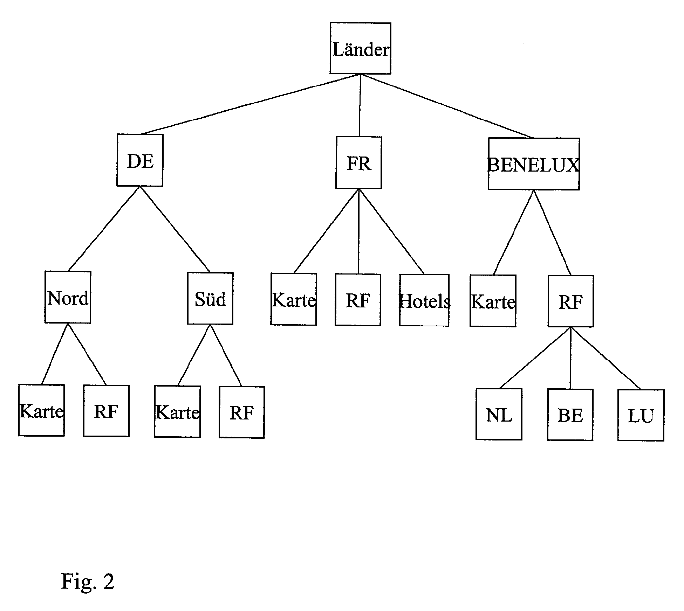

Figur 2 zeigt beispielhaft die hierarchische Dateistruktur einer CD-ROM mit Straßenkartendaten und weiteren Dateien. Gezeigt ist hier das Dateiverzeichnis "Länder". Darüber hinaus können weitere Dateiverzeichnisse, die beispielsweise spezielle Programme enthalten, wie beispielsweise ein Programm zur Zuordnung der Nummern von Autobahnanschlussstellen zu geographischen Daten, vorhanden sein. Das Dateiverzeichnis "Länder" weist die untergeordneten Dateiverzeichnisse "DE" für Deutschland, "FR" für Frankreich und "BENELUX" für die Beneluxländer auf. Das Dateiverzeichnis "DE" ist weiter aufgespalten in ein Dateiverzeichnis "Nord" und ein Dateiverzeichnis "Süd", die jeweils die Dateien zu den entsprechenden geographischen Gebieten Deutschlands enthalten. In dem Dateiverzeichnis "Nord" sind als Dateien eine Datenbank mit Straßenkartendaten und eine weitere Datenbank mit einem Reiseführer (RF) vorhanden. Entsprechende Dateien sind auch in dem Dateiverzeichnis "Süd" vorhanden. Das Dateiverzeichnis "FR" enthält direkt die entsprechenden Dateien für Frankreich, ohne dass eine weitere geographische Aufteilung vorgenommen wurde. Hierbei handelt es sich um eine Datei mit Straßenkartendaten, einen Reiseführer und einen Hotelführer. Das Dateiverzeichnis "BENELUX" weist sowohl eine Datei auf, die die Straßenkartendaten dieses Bereichs enthält, sowie ein Dateiverzeichnis (RF) das die Reiseführer der drei Länder Niederlande (NL), Belgien (BE) und Luxemburg (LU) enthält.

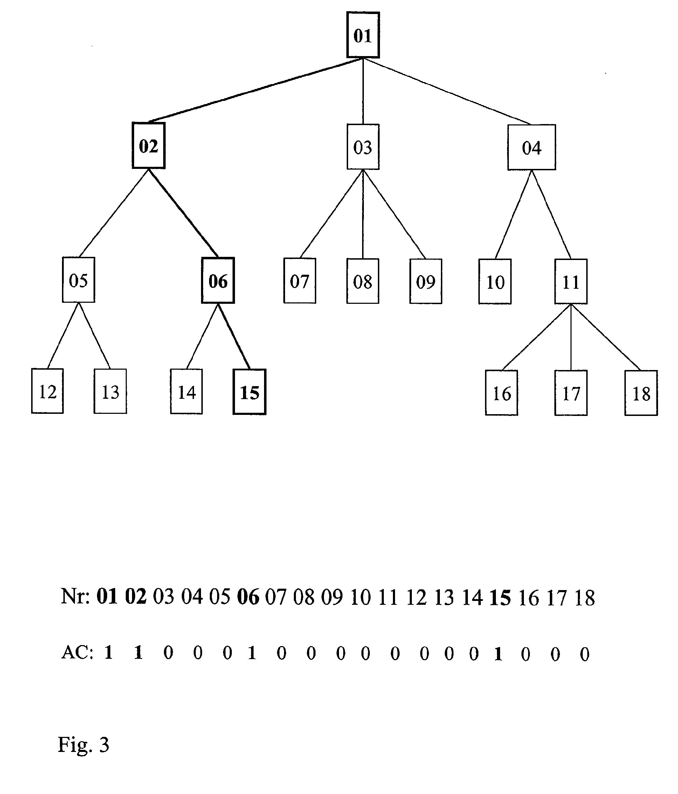

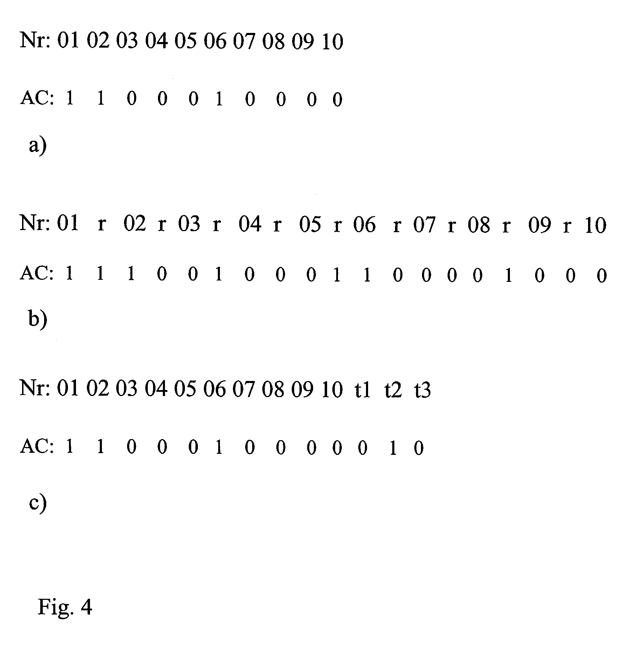

In Figur 3 ist die der Fig. 2 entsprechende Dateistruktur in verallgemeinerter Form dargestellt, wobei die Dateien nunmehr durchnummeriert sind. Wie schon erwähnt, kann es sich bei den Dateien sowohl um Dateiverzeichnisse, Datenbanken oder Anwendungsprogramme handelt. Jeder der in Fig. 3 dargestellten Dateien ist eine Zugriffsberechtigungskennung zugeordnet, die als Vektor mit 18 Komponenten beschreibbar ist. Die Anzahl der Komponenten entspricht der Gesamtsumme der Dateien bzw. Dateiverzeichnisse. Das Dateiverzeichnis D01 ist dabei durch die erste Komponente des Vektors, das Dateiverzeichnis D02 durch die zweite Komponente und allgemein die Datei m durch die Komponente m des Vektors gekennzeichnet. Der gesamte Vektor für die Kennung einer Datei setzt sich nun aus dem Weg zusammen, der zu dieser Datei führt. Dies wird am Beispiel der Datei D15 beschrieben und ist in Fig. 3 im unteren Bereich dargestellt. Der Weg zu der Datei D15 führt über die Dateien bzw. Dateiverzeichnisse D01, D02, D06 und D15, so dass im zugehörigen Vektor für die Datei D15 die entsprechenden Positionen 01, 02, 06 und 15 den Wert 1 annehmen, während alle anderen Komponenten des Vektors den Wert 0 annehmen. Um einen ausreichenden Schutz der Zugriffsberechtigungskennung zu gewährleisten, sollte diese aus nicht zu wenigen Komponenten bestehen. Um auch bei einer geringen Anzahl von Dateien einen ausreichenden Schutz durch die Zugriffsberechtigungskennung zu gewährleisten, kann diese erweitert werden, wie dies in Fig. 4 dargestellt ist.

In Figur 4a ist eine Zugriffsberechtigungskennung mit 10 Komponenten dargestellt, wobei dies der Anzahl der Dateien entsprechen soll. In Fig. 3b ist eine Erweiterung dieser Zugriffsberechtigungskennung auf 19 Komponenten dargestellt, wobei zwischen den eine Datei kennzeichnenden Komponenten Zufallskomponenten r eingefügt sind, die durch das Navigationssystem wieder eliminiert werden.

Der Nutzer eines Navigationssystems kann nun eine CD-ROM mit mehreren Dateien käuflich erwerben, wobei er zunächst noch keine endgültigen Nutzungsrechte erwerben muss. Beispielsweise erwirbt der Käufer eines Neuwagens zugleich mit diesem ein Navigationssystem und eine CD-ROM mit den zugehörigen Datenbanken. Da der Anwender jedoch u. U. als solcher noch nicht registriert ist, hat er mit seinem Navigationssystem auch noch keinen Zugang zu den einzelnen Dateien, die auf der CD-ROM verschlüsselt abgelegt sind. Zunächst wird der Anwender das Dateiverwaltungssystem, das ebenfalls auf der CD-ROM abgespeichert ist, in sein Computersystem laden. Anschließend muss sich der Anwender die Nutzungsberechtigung einholen. Hierzu kann er sich insbesondere mit einer Zentralstelle telefonisch in Verbindung setzen. Der Anwender übermittelt an diese Zentralstelle seinen Wunsch hinsichtlich der Nutzung einer bestimmten Datei, beispielsweise der Straßenkartendaten eines bestimmten Landes, sowie seine aktuelle Gerätekennung, die ihm beim Neukauf des Navigationssystems mitgeteilt wurde, sowie die benötigten Daten für die Bezahlung der Nutzungsrechte. Die Zentralstelle berechnet zunächst eine neue Gerätekennung ID(i) aus der bisherigen Gerätekennung ID(i-1) und einem Wechselvektor c, beispielsweise: ID(i) = ID(i-1) * c.

Anschließend wird ein erster chiffrierter Code PIN berechnet, der die neue Gerätekennung ID(i) und den für die Verschlüsselung der Dateien der CD-ROM erforderlichen Schlüssel k enthält, beispielsweise gemäß: PIN = inv[ID(i)] * k.

Anschließend wird ein zweiter chiffrierter Code ACW berechnet, der den Schlüssel k sowie die Zugriffsberechtigungskennung AC für die gewünschte freizuschaltende Datei enthält, beispielsweise gemäß: ACW = k * AC.

Die neue Gerätekennung ID(i) sowie eine Information über die freigeschaltete Datei und die Zahlungsmodalitäten werden anschließend in der Zentralstelle abgespeichert. Die chiffrierten Codes PIN und ACW werden dem Nutzer mitgeteilt. Dies kann telefonisch erfolgen oder auch per Briefpost. In diesen beiden Fällen ist es vorteilhaft, wenn der Vektor der chiffrierten Codes, der binäre Komponenten enthält, zunächst als Binärzahl geschrieben und in eine Dezimalzahl umgewandelt wird, wobei dann die Dezimalzahl an den Anwender übermittelt wird. Der Anwender kann in diesem Fall die einfachere und kürzere Dezimalzahl in sein Computersystem eingeben, das dann wiederum die Umwandlung in eine Binärzahl bzw. in einen Vektor mit binären Komponenten vornimmt. Entsprechend kann der Nutzer auch zu Beginn die Gerätekennung als Dezimalzahl an die Zentralstelle übermitteln, in der dann die Umwandlung der dezimalen Gerätekennung in einen Vektor erfolgt.

In einer alternativen Ausführungsform, bei der das Navigationssystem mit einem Funktelefon verbunden ist, kann ein automatisierter Ablauf vorgesehen sein. Dazu kann der Nutzer im Navigationssystem ein Menuprogramm aufrufen, das ihm eine Auswahl über die auf der CD-ROM abgespeicherten Programme und Datenbanken auflistet. Der Anwender wählt eines oder mehrere der gewünschten Programme aus und gibt zusätzlich die erforderlichen Angaben zu den Zahlungsmodalitäten, wie beispielsweise seine Kreditkartennummer, ein. Anschließend aktiviert der Anwender den Sendeaufruf mit dem die Mobilfunkverbindung zur Zentralstelle aufgerufen wird. Über diese Funkverbindung werden der Freischaltungswunsch, die Zahlungsdaten sowie die gegenwärtige Gerätekennung ID(i-1), die in einem nicht-flüchtigen Speicher des Computers abgelegt ist, automatisch übermittelt. Die Berechnung der chiffrierten Codes in der Zentralstelle erfolgt dann wie oben beschrieben.

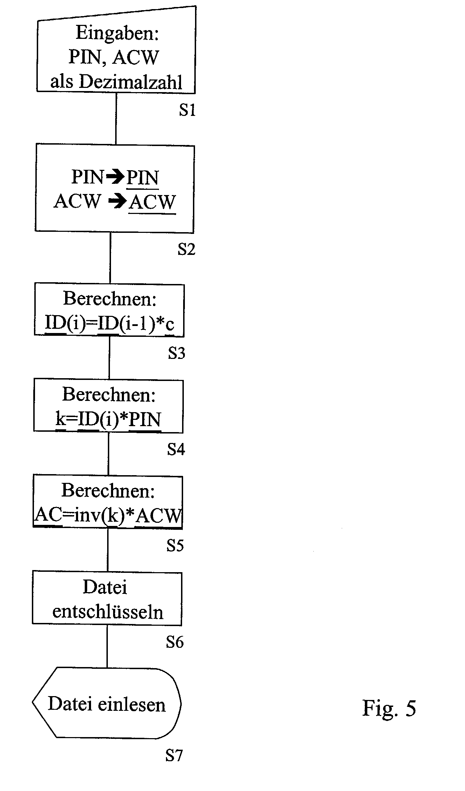

Im weiteren soll davon ausgegangen werden, dass die chiffrierten Codes dem Anwender mündlich oder schriftlich mitgeteilt worden sind. Das danach ablaufende Verfahren ist als Ablaufdiagramm in Fig. 5 dargestellt. In Schritt S1 gibt der Nutzer die chiffrierten Codes PIN und ACW als Dezimalzahl in das Navigationssystem über die Eingabetastatur ein. In Schritt 2 erfolgt im Navigationssystem die Umwandlung der chiffrierten Codes in Vektoren mit binären Komponenten, wobei zunächst die Dezimalzahl in eine Binärzahl umgewandelt wird und die einzelnen Ziffern der Binärzahl die Komponenten des Vektors darstellen. Anschließend wird im Navigationssystem aus der bisherigen Gerätekennung und einem Wechselvektor, die beide in einem nicht-flüchtigen Speicherelement abgespeichert sind, die neue Gerätekennung ID(i) berechnet.

In Schritt S4 wird mit der neuen Gerätekennung ID(i) und dem ersten chiffrierten Code PIN nun der Schlüssel k zur Entschlüsselung der Dateien berechnet, und zwar gemäß k = ID(i) * PIN.

Anschließend wird mit dem Schlüssel k bzw. dem zu dem Schlüsselvektor k inversen Vektor inv(k) und dem zweiten chiffrierten Code ACW die Zugriffsberechtigungskennung AC berechnet gemäß: AC = inv(k) * ACW. Für symmetrische Verschlüsselungsalgorithmen ist inv(k) = k.

Das Dateiverwaltungssystem des Navigationssystems gibt nun die zu der Kennung AC gehörende Datei zur Nutzung frei, und diese kann über den nunmehr bekannten Schlüssel k entschlüsselt werden oder zur Anzeige gebracht oder zur weiteren Bearbeitung genutzt werden.

Bei dem erfindungsgemäßen Verfahren ist somit die Freigabe einer Datei an die Gerätekennung gekoppelt, so dass die Freigabecodes nicht für ein anderes System genutzt werden können. Durch die bei jeder neuen Freigabe einer Nutzungsberechtigung vorgenommene Änderung der Gerätekennung wird eine erhöhte Sicherheit erreicht. Die Dateien auf dem Speichermedium sind zudem mit dem Schlüssel k verschlüsselt, wobei der Schlüssel k aus dem ersten chiffrierten Code PIN nur bei Kenntnis der Gerätekennung erzeugt werden kann. Die Kennung AC wiederum kann aus dem zweiten chiffrierten Code erst bei Kenntnis des Schlüssels k berechnet werden. Die Verschlüsselung kann dabei nach einem der bekannten Verfahren erfolgt sein, insbesondere nach dem Data Encryption Standard (DES) unter Verwendung eines Schlüssels mit einer Länge von 56 Bit.

Mit dem erfindungsgemäßen Verfahren kann weiterhin auch eine zeitlich befristete Freigabe von Dateien realisiert werden. Eine solche zeitlich befristete Freigabe ist beispielsweise von Interesse, wenn ein Anwender nur für einen beschränkten Zeitraum Landkartendaten eines bestimmten regionalen Bereichs benötigt. Hierbei kann es sich beispielsweise um einen einmaligen Auslandsurlaub in einem bestimmten Land für wenige Wochen handeln.

Eine solche befristete Freigabe einer Datei kann dadurch erreicht werden, dass die Zugriffsberechtigungskennung Komponenten enthält, die eine zeitlich befristete Freigabe kennzeichnen. Eine entsprechende Zugriffsberechtigungskennung ist beispielsweise in Fig. 3c dargestellt. In diesem Beispiel sind die ersten 10 Komponenten des Vektors AC für die Zugriffsberechtigungskennung mit den auf der CD-ROM abgespeicherten Dateien wie in den zuvor beschriebenen Fällen verknüpft. Weiterhin enthält der Vektor nun aber die Komponenten t1, t2 und t3, die Hinweise auf eine zeitlich beschränkte Nutzung geben. Beispielsweise kann über die Komponente t1 eine Freigabe der Datei für einen ersten Zeitraum von beispielsweise einer Woche gegeben sein, wenn diese Komponente auf 1 gesetzt ist. Entsprechend kann über die Komponente t2 eine Freigabe für einem zweiten Zeitraum von beispielsweise einem Monat gegeben sein, wenn diese Komponente auf 1 gesetzt ist. In entsprechender Weise kann über die Komponente t3 die Freischaltung für einen dritten Zeitraum von beispielsweise 6 Monaten vorgegeben werden. Der Zeitraum beginnt dabei erst mit der Freischaltung der Datei zu laufen. Das Navigationssystem bzw. das Dateiverwaltungsprogramm des Navigationssystems erkennt dabei, ob eine der Komponenten t1 bis t3 auf eins gesetzt wurde, und setzt eine entsprechende Zeitmarke, wobei bei jeder geplanten neuen Nutzung der Datei geprüft wird, ob der gesetzte Zeitrahmen abgelaufen ist.

In dem dargestellten Ausführungsbeispiel wurde davon ausgegangen, dass die Dateien auf einer CD-ROM oder dergleichen abgespeichert sind und diese CD-ROM an die Anwender ausgegeben wird. Das Navigationssystem greift dabei stets auf die auf der CD-ROM abgespeicherten Dateien zu. Es ist jedoch auch möglich die Dateien auf einem Speicherelement der Recheneinheit, insbesondere einer Festplatte, abzuspeichern. Die Übertragung der Dateien auf die Festplatte kann von der CD-ROM aus erfolgen oder bei einem Multimediasystem beispielsweise auch mittels der Mobilfunkverbindung vom Internet.

Weiterhin können die chiffrierten Codes auch auf einem Speichermedium geringer Speicherdichte, beispielsweise einer "smart-card", abgespeichert und dem Nutzer zugänglich gemacht werden. Die Codes können über ein entsprechendes Lesegerät dann direkt von diesem Speichermedium in das Navigationssystem eingelesen werden.

## Patentansprüche

1. Speichermedium zur Verwendung in einem Kraftfahrzeug-Computersystem, das als Navigations- oder Multimediasystem ausgebildet ist, wobei auf dem Speichermedium mehrere Dateien in einer hierarchischen Dateistruktur in verschlüsselter Form abgespeichert sind, denen zur Gewährleistung eines ausschließlich autorisierten Zugangs eine Kennung zugeordnet ist, die als Vektor beschreibbar ist.

2. Speichermedium nach Anspruch 1, **dadurch gekennzeichnet, dass** es sich um einen m-dimensionalen Vektor handelt, wobei m die Anzahl der Dateien ist.

3. Speichermedium nach Anspruch 1 oder 2, **dadurch gekennzeichnet, dass** der Vektor binäre Komponenten aufweist.

4. Speichermedium nach einem der vorhergehenden Ansprüche, **dadurch gekennzeichnet, dass** über die m Komponenten a(1), a(2), a(3), ... des Vektors AC(x) = (a(1), a(2), a(3), ...., a(x-1), a(x), a(x+1), ..., a(m)) die Position einer Datei D(x) in der hierarchischen Dateistruktur derart **gekennzeichnet** ist, dass alle Komponenten des Vektors AC(x), die Dateien zugeordnet sind, von denen die Datei D(x) hierarchisch abhängig ist, einen ersten Wert, insbesondere den Wert 1, annehmen, während alle verbleibenden Komponenten, die Dateien zugeordnet sind, von denen die Datei D(x) hierarchisch nicht abhängig ist, einen zweiten Wert, insbesondere den Wert O, annehmen.

5. Speichermedium nach einem der vorhergehenden Ansprüche, **dadurch gekennzeichnet, dass** es sich um ein optisches Speichermedium handelt.

6. Speichermedium nach einem der vorhergehenden Ansprüche, **dadurch gekennzeichnet, dass** es sich um eine CD-ROM handelt.

7. Speichermedium nach einem der vorhergehenden Ansprüche, **dadurch gekennzeichnet, dass** es sich um eine DVD handelt.
